# EUROPEAN PATENT APPLICATION

(11) **EP 1 927 829 A2**
(43) Date of publication of application: **04.06.2008**
(21) Application number: 07023182.4
(22) Date of filing: 29.11.2007
(51) Int. Cl.: G01H 1/00

(54) **Working process monitoring device**

(30) Priority: 30.11.2006 JP 2006324585
(71) Applicant: MATSUSHITA ELECTRIC WORKS, LTD., Kadoma-shi, Osaka (JP)
(72) Inventor: Ikeda, Kazutaka, Kadoma-shi Osaka (JP)
(74) Representative: Samson & Partner

(57) **Abstract**

A working process monitoring device includes: a sensor unit for detecting at least one of vibrations and sound waves produced while processing a workpiece by a working machine rotatably driven by a driving unit; a signal input unit for extracting target signals from an electric signal outputted from the sensor unit; and an amount of characteristics extracting unit for extracting amounts of characteristics including a plurality of parameters from the target signals. Further, the working process monitoring device includes a material inspecting unit for detecting whether a material of a portion of the workpiece currently being processed is normal in quality or not, wherein the material inspecting unit employs a neural network trained by using amounts of characteristics extracted from target signals obtained while processing a workpiece made of a normal quality material.

## Description

The present invention relates to a working process monitoring device; and, more particularly, to a monitoring device capable of determining whether a material of a workpiece is normal or not while the workpiece is being processed by a working machine driven by a driving source.

Conventionally, there has been known a technique determining whether an anomaly exists in a machining process by analyzing frequencies or amplitudes of sounds produced while a machine is machining a workpiece (see, e.g., Japanese Patent Laid-open Application No.2001-87863). The Japanese Patent Application discloses a technique detecting an anomaly occurring during the machining process due to an anomaly in a gas or consumption of supply items while machining a plate by using a plasma torch.

Since, however, the technique disclosed in the Japanese Patent Application detects an anomaly in the machining process only from frequencies or amplitudes of sounds produced by the machining operation, variations in the material of the workpiece can not be detected. Therefore, it cannot properly deal with such situations where the workpice contains a foreign substance therein and/or machining conditions of the workpiece are changed due to nonuniformity in the material of the workpiece, for example.

In view of the above, the present invention provides a working process monitoring device capable of detecting variations in the material of a workpiece which is being machined, so that it can deal with such situations where the workpiece contains a foreign substance and/or there exists nonuniformity in the material of the workpiece, for example.

In accordance with an aspect of the present invention, a working process monitoring device includes: a sensor unit for detecting at least one of vibrations and sound waves produced while processing a workpiece by a working machine rotatably driven by a driving unit; a signal input unit for extracting target signals from an electric signal outputted from the sensor unit; and an amount of characteristics extracting unit for extracting amounts of characteristics including a plurality of parameters from the target signals. The working process monitoring device further includes a material inspecting unit for detecting whether a material of a portion of the workpiece currently being processed is normal in quality or not. The material inspecting unit employs a neural network trained by using amounts of characteristics extracted from target signals obtained while processing a workpiece made of a normal quality material.

In this configuration, the amounts of characteristics are extracted from vibrations and/or sound waves generated from the working machine, and it is detected whether the material of the workpiece is normal in quality or not through the use of the neural network trained by using the amounts of characteristics obtained with respect to the workpiece made of normal quality material. Therefore, it is possible to detect a possibility of breakdown of the working machine caused by, e.g., a foreign substance stuck into the workpiece or the nonuniformity in the material of the workpiece.

It is preferable that the workpiece is wood, and the working machine is a cutting device having a saw blade driven by the driving unit. Moreover, the working process monitoring device may further include a machining terminating unit which terminates machining operation of the workpiece when the material inspecting unit detects that the material of the portion of the workpiece is not normal.

In this configuration, if there is a possibility that saw teeth of the saw blade could be damaged due to a hard foreign substance such as a piece of stone stuck into the workpiece or due to the nonuniformity in the material of the workpiece, or if proper cutting of the workpiece cannot be made due to a knot or a knot hole, the machining operation is terminated to prevent the occurrence of such situations which could take place otherwise.

It is also preferable that the saw blade may be disposed at the working machine to cut the workpiece across wood grain thereof, and at least one of a cutting speed and a relative feed speed between the workpiece and the saw blade is controllable, early wood portions and late wood portions of the workpiece being treated as normal material portions among portions being machined. Moreover, the working process monitoring device further includes a speed control unit which controls at least one of the cutting speed and the feed speed so that an amount of contact per unit time that saw teeth of the saw blade is in contact with the workpiece while cutting the late wood portions is greater than that while cutting the early wood portions.

In this configuration, the material inspecting unit is trained to distinguish the early wood portions and the late wood portions which are harder than the former, and the amount of contact per unit time of the saw teeth of the saw blade with respect to the late wood portions are made greater than that with respect to the early wood portions. Therefore, cutting of the workpiece can be facilitated.

In order to adjust the amount of contact of the saw teeth of the saw blade to a workpiece, at least one of a feed speed of the saw teeth of the saw blade (a rotational speed in case of a circular saw, and driving speed in case of a band saw) and a feed speed of the workpiece relative to that of the saw blade (mostly, the velocity of the workpiece) is adjusted. Cutting can be facilitated by adjusting the amount of contact of the saw teeth of the saw blade to the late wood portions to be greater than that to the early wood portions which are softer than the late wood portions.

Further, the neural network may be a competitive learning neural network.

Since the competitive learning neural network is used in this embodiment, simple configuration is possible and, moreover, learning can be simply carried out by colleting the training samples with respect to every category and assigning the training samples to the respective categories.

The objects and features of the present invention will become apparent from the following description of embodiments given in conjunction with the accompanying drawings, in which:
Fig. 1 is a block diagram of a working process monitoring device in accordance with an embodiment of the present invention;
Fig. 2 illustrates a schematic configuration of a neural network used in the embodiment; and
Fig. 3 describes a relation between a workpiece and a saw blade in the embodiment.

Embodiments of the present invention will now be described with reference to the accompanying drawings which form a part hereof.

A working machine exemplified in an embodiment described below has a saw blade rotatably driven by a driving unit including driving source such as a motor. The saw blade may be a circular saw or a band saw. The working machine may be an agitation apparatus, a mixing apparatus, an extrusion molding apparatus for molding a resin, or the like. In case of the agitation apparatus or the mixing apparatus, it is possible to detect abnormal vibrations caused by, e.g., foreign substances mixed into a target material to be agitated or mixed, and in case of the extrusion molding apparatus, it becomes possible to detect the nonuniformity in the resin. In case of the agitation apparatus and the mixing apparatus, vibrations of a rotation shaft may be detected, while, in case of the extrusion molding apparatus, an extrusion pressure may be detected by a pressure sensor.

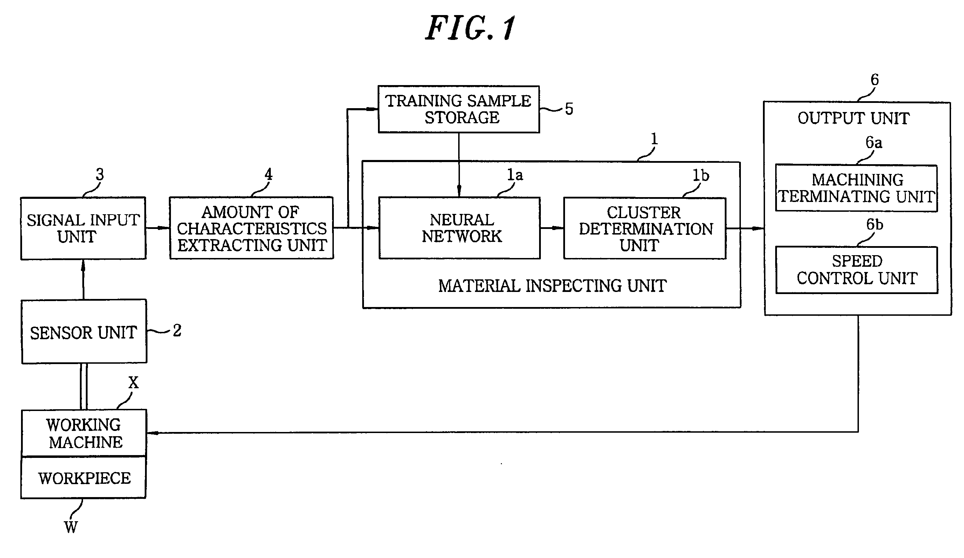

A working process monitoring device shown in Fig. 1 in accordance with the present embodiment employs an unsupervised competitive learning neural network 1a (hereinafter, simply referred to as a neural network if not otherwise necessary). A supervised backpropagation type neural network can be also used as a neural network in the embodiment, but the unsupervised competitive learning neural network is preferred because it is simpler in configuration than the supervised back propagation type.

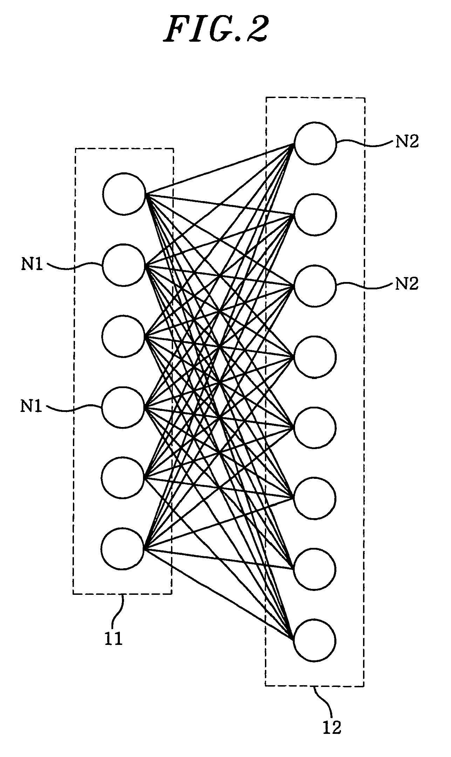

As shown in Fig. 2, the neural network 1a has two layers, i.e., an input layer 11 and an output layer 12, and is configured such that every neuron N2 of the output layer 12 is connected to all neurons N1 of the input layer 11. In the embodiment, the neural network 1a may be executed by an application program running at a sequential processing type computer, but a dedicated neuro-computer may be used.

The neural network 1a has two modes of operations, i.e., a training mode and a checking mode. After learning through proper training samples in the training mode, an amount of characteristics (check data) formed of a plurality of parameters generated from an actual target signal is classified into a category in the checking mode.

A coupling degree (weight coefficients) between the neurons N1 of the input layer 11 and the neurons N2 of the output layer 12 is variable. In the training mode, the neural network 1a is trained by inputting training samples to the neural network 1a so that respective weight coefficients between the neurons N1 of the input layer 11 and the neurons N2 of the output layer 12 are decided. In other words, every neuron N2 of the output layer 12 is assigned with a weight vector having weight coefficients associated with all the neurons N1 of the input layer 11 as elements of the weight vector. Therefore, the weight vector has the same number of elements as the number of neurons N1 in the input layer 11, and the number of parameters of the amount of characteristics inputted to the input layer 11 is equal to the number of the elements of the weight vector.

Meanwhile, in the checking mode, when check data whose category needs to be decided is given to the input layer 11 of the neural network 1a, a neuron having the shortest Euclidean distance between the its weight vector and the check data, is excited among the neurons N2 of the output layer 12. If categories are assigned to the neurons N2 of the output layer 12 in the training mode, a category of the check data can be recognized by a category of a location of the excited neuron N2.

The neurons N2 of the output layer 12 are associated with zones of two-dimensional cluster determination unit 1b having, e.g., 6 * 6 zones in one-to-one correspondence. Therefore, if categories of the training samples are associated with the zones of the cluster determination unit 1b, a category corresponding to a neuron N2 excited by check data can be recognized by the cluster determination unit 1b. Thus, the cluster determination unit 1b can function as an output unit for outputting a classified result. Here, the cluster determination unit 1b may be visualized by using a map.

When associating categories with each of the zones of the cluster determination unit 1b (actually each of the neurons N2 of the output layer 12), trained neural network 1a is operated in the reverse direction from the output layer 12 to the input layer 11 to estimate data assigned to the input layer 11 for every neuron N2 of the output layer 12. A category of a training sample having the shortest Euclidean distance with respect to the estimated data is used as a category of a corresponding neuron N2 in the output layer 12.

In other word, a category of a training sample having the shortest Euclidean distance with respect to a weight vector of a neuron N2 is used as a category of the corresponding neuron N2 of the output layer 12. As a result, the categories of the training samples are reflected to the categories of the neurons N2 of the output layer 12.

A large number of training samples (for example, 150 samples) are employed to each of the categories so that categories having similar attributes are arranged close together in the cluster determination unit 1b. In other words, the neurons N2, excited among the neurons N2 of the output layer 12 in response to training samples belonging to a like category, form a cluster formed of a group of neurons N2 residing close together in the cluster determination unit 1b.

Cluster determination unit 1b is originally the one in which clusters are formed in association with categories after training, but in this embodiment even the one before training is also called a cluster determination unit 1b so that both of them are not distinguished in this context. The training samples given to the neural network 1a operating in the training mode are stored in a training sample storage 5 and retrieved therefrom to be used in the neural network 1a when necessary.

In this embodiment, the neural network 1a is used for detecting material quality of a workpiece which is being processed. Therefore, the neural network 1a and the cluster determination unit 1b function as a material inspecting unit 1. At least one of vibrations or sound waves generated while the working machine X is processing a workpiece is used as information when the material inspecting unit 1 detects the material quality of the workpiece W. When detecting vibrations of the working machine X, a vibration sensor formed of an acceleration pickup is attached to the working machine X to be used as a sensor unit 2. Further, when detecting sound waves generated while the workpiece is being processed, a microphone or an acoustic emission sensor may be used as the sensor unit 2. Here, the vibration sensor is assumed to be used as the sensor unit 2.

An electric signal is outputted from the sensor unit 2 are inputted to a signal input unit 3, and is segmented by the signal input unit 3 to produce target signals from which amounts of characteristics are extracted. An extracted amount of characteristics varies depending on a position in the output of the sensor unit 2 on a time axis, from which position the amount of characteristics being extracted. Therefore, prior to the extraction of amounts of characteristics, the signal input unit 3 establishes, in the output of the sensor unit 2, positions from which the amounts of characteristics are extracted in order to extract the amounts of characteristics under the substantially identical condition.

In this embodiment, the signal input unit 3 performs segmentation, which will be described later, on the electric signal which is the output of the sensor unit 2, and the segmented portions in the electric signal are used as the target signals. The target signals are assigned to an amount of characteristics extracting unit 4 and the amounts of characteristics each amount including a plurality of parameters are extracted from the target signals.

The signal input unit 3 performs the segmentation of the electric signal outputted from the sensor unit 2 on the time axis, e.g., by using a timing signal (trigger signal) synchronous with the operation of the working machine X or based on wave characteristics of the electric signal (for example, a start point and an end point of an envelop of the electric signal).

The signal input unit 3 has an A/D converter for converting the electric signal produced by the sensor unit 2 into digital signals and a buffer for temporarily storing the digital signals. The aforementioned segmentation is performed on the signals stored in the buffer. Further, limitation of a frequency bandwidth or the like is performed in order to reduce noises when necessary. In the segmentation of the electric signal, only a single segmented signal need not be outputted from one period of the electric signal, but a plurality of segmented signals may be made per every proper unit time.

The target signals segmented by the signal input unit 3 are inputted to the amount of characteristics extracting unit 4. The amounts of characteristics extracting unit 4 extracts one set of amount of characteristics including a plurality of parameters from one target signal. The amounts of characteristics can be adaptively extracted according to characteristics to be considered in the target signals. For example, as for the amount of characteristics, frequency components of the whole frequency bandwidth detected by the sensor unit 2 (power at every frequency bandwidth) may be extracted, or frequency components of an envelop of the electric signal detected by the sensor unit 2 may be extracted. The amount of characteristics extracting unit 4 may use FFT (Fast Fourier Transform) in order to extract the frequency components. Frequency components to be used in the amount of characteristics are properly selected.

The amount of characteristics extracting unit 4 extracts amounts of characteristics, each amount having a plurality of parameters (frequency bandwidths), and the neural network 1a of the material inspecting unit 1 classifies the amounts of characteristics. The neural network 1a classifies the amounts of characteristics to determine whether a material of the workpiece W is basically normal in quality or not. In the present embodiment, the workpiece is assumed to be made of wood, and thus both of the early wood portions and the late wood portions forming growth rings are treated as normal quality materials.

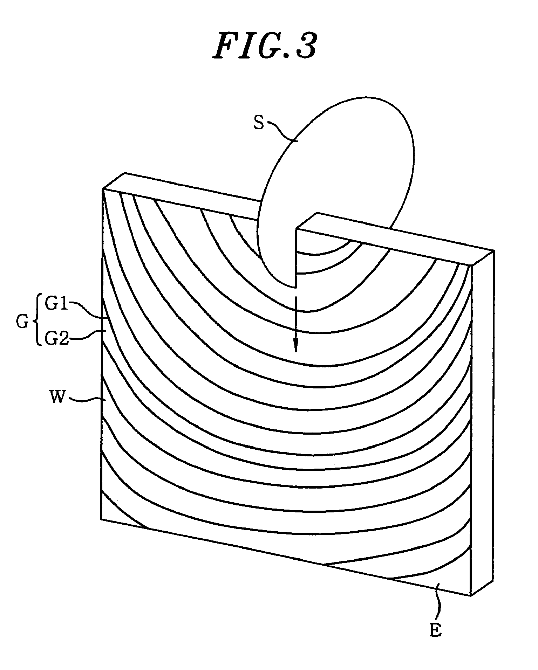

The early wood portions are light in density due to a high plant growth rate, while the late wood portions are dense in density due to a low plant growth rate. That is, the late wood portions are harder than the early wood portions. Therefore, when the workpiece is cut by the saw blade S moving across wood grain G (i.e., annual rings) formed in the cross section E of the wood of the workpiece W as shown in Fig. 3, a cut resistance of the late wood portions G1 is larger than that of the early wood portions G2. Such wood working corresponds to a case of dividing a piece of wood, i.e., a workpiece, in a shape of a board into desired sizes. The cut resistance of a knot is greater than that of the late wood portions G1, while the cut resistance of a knot hole is less than that of the early wood portions G2. Further, if a foreign substance such as a piece of stone is stuck into a workpiece, the cut resistance becomes extremely large.

In this embodiment, the late wood portions G1 and the early wood portions G2 are determined as normal quality materials, and a knot, a knot hole and a piece of stone are determined as abnormal quality materials. Therefore, the neural network 1a needs to be trained by using amounts of characteristics obtained while performing normal cutting, i.e., while cutting the late wood portions G1 and the early wood portions G2.

Therefore, amounts of characteristics obtained while cutting the workpiece, which have been determined to be of a normal quality material by the naked eye are stored in the training sample storage 5 stores as training samples. That is, the amounts of characteristics obtained by the amount of characteristics extracting unit 4 are stored and collected in the training sample storage 5 as training samples prior to performing the training mode. It is preferable that the training samples are assigned with a category for the late wood portions G1 and that for the early wood portions G2. If the wood grain is not well developed in the wood material, only a normal category can be assigned instead of categories for the late wood portions G1 and the early wood portions G2.

After a specific number of training samples (for example, 150 samples) are collected with respect to each of the categories in the training data storage 5, the neural network 1a in the training mode is trained by using the training samples stored in the training sample storage 5.

The data stored in the training sample storage 5 may be called data sets. As can be seen from the description provided above, the training sample storage 5 stores a data set to which the category of the late wood portions is assigned and a data set to which the category of the early wood portions is assigned. The number of data constituting each data set can be arbitrarily decided within a capacity of the training sample storage 5. However, it is preferable that about 150 of data per each category are used to train the neural network 1a as described above.

If the neural network 1a is trained as aforementioned, every neuron N2 in the output layer 12 is assigned with a weight vector having the weight coefficients associated with all the neurons N1 of the input layer 11 as elements of the weight vector. Therefore, if a training sample belonging to a category is assigned to the neural network 1a in the checking mode, a neuron N2 associated with the category is excited. Since, however, the training samples are different from each other, training samples (a data set) included in a single category excite more than one neuron N2, which form a cluster.

Therefore, in the cluster determination unit 1b, the zones corresponding to the neurons N2 excited by the training samples included in the respective categories are the zones representing normal quality of material with respect to the corresponding categories. In other words, if a neuron N2 belonging to a normal cluster is excited during the cutting operation of a wood material, it indicates that the quality of the wood material is normal. On the other hands, when a neuron N2 which does not belong to the normal clusters is excited, it can be determined that the wood material contains a foreign substance, a knot, or a knot hole.

When the excited neuron N2 does not belong to any clusters for the late wood portions G1 and the early wood portions G2, the saw blade S is most likely in contact with a foreign substance, a knot, or a knot hole, so that there is a possible that the saw blade S can be damage, or the cutting may not be carried out properly. Therefore, cluster determination unit 1b issues an instruction to a machining terminating unit 6a provided at an output unit 6 to terminate the machining operation of the working machine X. As a result, the saw blade S is prevented from being damaged and, moreover, the deterioration of machining precision due to a knot or a knot hole can be prevented. It may be preferable that an operator is notified of an existence of a foreign substance, a knot, or a knot hole when the material inspecting unit 1 detects it, so that proper maintenance can be made by the operator.

As aforementioned, there exist the late wood portions G1 and the early wood portions G2 having different hardness in the wood grain (the annual rings) G. Therefore, it is preferable to vary amounts of contact per unit time between the saw teeth of the saw blade S and the wood portions while cutting is performed. It has been known that cutting the hard portions can be carried out easily by raising the amount of contact. Therefore, a speed control unit 6b is provided in the output unit 6 to control the amount of contact to be varied according to whether an excited neuron N2 belongs to the category for the late wood portions G1 or the category for to the early wood portions G2 in the cluster determination unit 1b. The speed control unit 6b controls the amount of contact to be great (i.e., increasing a cutting speed, i.e., moving speed of the blade teeth, or decreasing a feed speed of the workpiece W) in case of the hard late wood portions G1, while it controls the amount of contact to be small (i.e., decreasing the cutting speed or increasing in the feed speed of the workpiece W) in case of the soft early wood portions G2.

As a result, the cutting can be facilitated. The amounts of characteristics are extracted from the electric signal generated from the vibration sensor in this embodiment. However, the amounts of characteristics may be extracted from the signals representing vibrations of the working machine X, e.g., a load current of a motor provided at the driving device. However, if the load current is used in extracting the amount of characteristics, the amount of characteristics may include a lot of unnecessary information. On the other hand, the amounts of characteristics are extracted from the vibrations in this embodiment, so that it is easy to acquire target information required by the neural network 1a and it is simple to obtain information on quality of material of the workpiece W.

While the invention has been shown and described with respect to the embodiments, it will be understood by those skilled in the art that various changes and modifications may be made without departing from the scope of the invention as defined in the following claims.

## Claims

1. A working process monitoring device, comprising:
a sensor unit for detecting at least one of vibrations and sound waves produced while processing a workpiece by a working machine rotatably driven by a driving unit;
a signal input unit for extracting target signals from an electric signal outputted from the sensor unit;
an amount of characteristics extracting unit for extracting amounts of characteristics including a plurality of parameters from the target signals; and
a material inspecting unit for detecting whether a material of a portion of the workpiece currently being processed is normal in quality or not, wherein the material inspecting unit employs a neural network trained by using amounts of characteristics extracted from target signals obtained while processing a workpiece made of a normal quality material.

2. The working process monitoring device of claim 1, wherein the workpiece is wood, and the working machine is a cutting device having a saw blade driven by the driving unit, and
wherein the working process monitoring device further comprising a machining terminating unit which terminates machining operation of the workpiece when the material inspecting unit detects that the material of the portion of the workpiece is not normal.

3. The working process monitoring device of claim 2, wherein the saw blade is disposed at the working machine to cut the workpiece across wood grain thereof, and at least one of a cutting speed and a relative feed speed between the workpiece and the saw blade is controllable, and
wherein early wood portions and late wood portions of the workpiece are treated as normal material portions among portions being machined,
the working process monitoring device further comprising a speed control unit which controls at least one of the cutting speed and the feed speed so that an amount of contact per unit time that saw teeth of the saw blade is in contact with the workpiece while cutting the late wood portions is greater than that while cutting the early wood portions.

4. The working process monitoring device of any one of claims 1 to 3, wherein the neural network is a competitive learning neural network.
